# EUROPEAN PATENT APPLICATION

(11) **EP 4 636 230 A1**
(43) Date of publication of application: **22.10.2025**
(21) Application number: 25165796.1
(22) Date of filing: 24.03.2025
(51) Int. Cl.: F01M 1/20, F01D 25/18, F02C 7/06, F16N 29/04

(54) **SYSTEMS, APPARATUSES, METHODS, AND COMPUTER PROGRAM PRODUCTS FOR INITIATING PERFORMANCE OF ONE OR MORE RESPONSIVE ACTIONS BASED AT LEAST IN PART ON ERRATIC OIL PRESSURE DATA**

(30) Priority: 18.04.2024 US 202418639570
(71) Applicant: Honeywell International Inc., Charlotte, NC 28202 (US)
(72) Inventor: HICKENBOTTOM, Christopher, Charlotte, 28202 (US); HRNCIR, Zdenek, Charlotte, 28202 (US); AITCHISON, Jeffrey J., Charlotte, 28202 (US)
(74) Representative: Haseltine Lake Kempner LLP

(57) **Abstract**

Systems, apparatuses, methods, and computer program products are provided herein. For example, a method provided herein may include identifying oil pressure data associated with an engine. In some embodiments, the method may include generating adjusted oil pressure data by adjusting the oil pressure data by an engine speed or an ambient pressure. In some embodiments, the method may include generating, by applying the adjusted oil pressure data to an oil pressure residual model, oil pressure residual data indicative of one or more oil pressure residuals. In some embodiments, the method may include generating, by performing a windowing operation on the oil pressure residual data, erratic oil pressure data for a carbon seal associated with the engine. In some embodiments, the method may include initiating performance of one or more responsive actions based at least in part on the erratic oil pressure data.

## Description

### TECHNOLOGICAL FIELD

Embodiments of the present disclosure relate generally to systems, apparatuses, methods, and computer program products for initiating performance of one or more responsive actions based at least in part on erratic oil pressure data.

### TECHNOLOGICAL FIELD

Applicant has identified many technical challenges and difficulties associated with systems, apparatuses, methods, and computer program products for initiating performance of one or more responsive actions based at least in part on erratic oil pressure data. Through applied effort, ingenuity, and innovation, Applicant has solved problems related to systems, apparatuses, methods, and computer program products for initiating performance of one or more responsive actions based at least in part on erratic oil pressure data by developing solutions embodied in the present disclosure, which are described in detail below.

### BRIEF SUMMARY

Various embodiments described herein relate to systems, apparatuses, methods, and computer program products for initiating performance of one or more responsive actions based at least in part on erratic oil pressure data.

In accordance with one aspect of the disclosure, a method is provided. In some embodiments, the method may include initiating performance of a maintenance action for the carbon seal. In some embodiments, the method may include generating adjusted oil pressure data by adjusting the oil pressure data by an engine speed or an ambient pressure. In some embodiments, the method may include generating, by applying the adjusted oil pressure data to an oil pressure residual model, oil pressure residual data indicative of one or more oil pressure residuals. In some embodiments, the method may include generating, by performing a windowing operation on the oil pressure residual data, erratic oil pressure data for a carbon seal associated with the engine. In some embodiments, the method may include initiating performance of one or more responsive actions based at least in part on the erratic oil pressure data.

In some embodiments, the oil pressure data is indicative of a differential pressure.

In some embodiments, the differential pressure is indicative of a difference between a first pressure associated with an oil pump and a second pressure associated with a sump scavenge.

In some embodiments, a first portion of the oil pressure data is identified from a first engine control unit associated with the engine and a second portion of the oil pressure data is identified from a second engine control unit associated with the engine.

In some embodiments, the method may include filtering the oil pressure data to remove at least a portion of the oil pressure data from the oil pressure data.

In some embodiments, performing the windowing operation on the oil pressure residual data may include identifying a maximum oil pressure residual associated with the oil pressure residual data.

In some embodiments, performing the windowing operation on the oil pressure residual data may include identifying a minimum oil pressure residual associated with the oil pressure residual data.

In some embodiments, performing the windowing operation on the oil pressure residual data may include determining an oil pressure residual range using the maximum oil pressure residual associated with the oil pressure residual data and the minimum oil pressure residual associated with oil pressure residual data.

In some embodiments, performing the windowing operation on the oil pressure residual data may include determining if the oil pressure residual range is greater than an oil pressure residual range threshold.

In some embodiments, the method may include performing an event operation.

In some embodiments, performing the event operation may include parsing the oil pressure residual data using an event detection model to identify an event.

In some embodiments, performing the event operation may include identifying a maximum oil pressure residual from a first set of oil pressure residuals associated with the oil pressure residual data.

In some embodiments, performing the event operation may include identifying a minimum oil pressure residual from a second set of oil pressure residuals associated with the oil pressure residual data.

In some embodiments, performing the event operation may include determining an oil pressure residual range using the maximum oil pressure residual from the first set of oil pressure residuals associated with oil pressure residual data and the minimum oil pressure residual from the second set of oil pressure residuals associated with oil pressure residual data.

In some embodiments, performing the event operation may include, in an instance in which the oil pressure residual range is less than an oil pressure residual range threshold, adjusting at least a portion of the oil pressure residual data by performing a refinement operation on the oil pressure residual data.

In some embodiments, performing a refinement operation may include determining a mean value of a first portion of the oil pressure residual data, wherein the first portion of the oil pressure residual data is associated with a first time period, wherein the first time period occurs before the event.

In some embodiments, performing the refinement operation may include determining a mean value of a second portion of the oil pressure residual data, wherein the second portion of the oil pressure residual data is associated with a second time period, wherein the second time period occurs after the event.

In some embodiments, performing the refinement operation may include adjusting the second portion of the oil pressure residual data such that the mean value of the second portion of the oil pressure residual data is equal to the mean value of the first portion of the oil pressure residual data.

In some embodiments, the engine is an aircraft engine.

In some embodiments, initiating performance of one or more responsive actions based at least in part on the erratic oil pressure data may include initiating performance of a maintenance action for the carbon seal.

In accordance with another aspect of the disclosure, an apparatus is provided. In some embodiments, the apparatus may include at least one processor and at least one non-transitory memory including computer-coded instructions thereon. In some embodiments, the computer-coded instructions, with the at least one processor, cause the apparatus to initiate performance of a maintenance action for the carbon seal. In some embodiments, the computer-coded instructions, with the at least one processor, cause the apparatus to generate adjusted oil pressure data by an engine speed or an ambient pressure. In some embodiments, the computer-coded instructions, with the at least one processor, cause the apparatus to generate, by applying the adjusted oil pressure data to an oil pressure residual model, oil pressure residual data indicative of one or more oil pressure residuals. In some embodiments, the computer-coded instructions, with the at least one processor, cause the apparatus to generate, by performing a windowing operation on the oil pressure residual data, erratic oil pressure data for a carbon seal associated with the engine. In some embodiments, the computer-coded instructions, with the at least one processor, cause the apparatus to initiate performance of one or more responsive actions based at least in part on the erratic oil pressure data.

In some embodiments, the oil pressure data is indicative of a differential pressure.

In some embodiments, the differential pressure is indicative of a difference between a first pressure associated with an oil pump and a second pressure associated with a sump scavenge.

In some embodiments, a first portion of the oil pressure data is identified from a first engine control unit associated with the engine and a second portion of the oil pressure data is identified from a second engine control unit associated with the engine.

In some embodiments, the computer-coded instructions, with the at least one processor, cause the apparatus to filter the oil pressure data to remove at least a portion of the oil pressure data from the oil pressure data.

In some embodiments, performing the windowing operation on the oil pressure residual data may include identifying a maximum oil pressure residual associated with the oil pressure residual data.

In some embodiments, performing the windowing operation on the oil pressure residual data may include identifying a minimum oil pressure residual associated with the oil pressure residual data.

In some embodiments, performing the windowing operation on the oil pressure residual data may include determining an oil pressure residual range using the maximum oil pressure residual associated with the oil pressure residual data and the minimum oil pressure residual associated with oil pressure residual data.

In some embodiments, performing the windowing operation on the oil pressure residual data may include determining if the oil pressure residual range is greater than an oil pressure residual range threshold.

In some embodiments, the computer-coded instructions, with the at least one processor, cause the apparatus to perform an event operation.

In some embodiments, performing the event operation may include parsing the oil pressure residual data using an event detection model to identify an event.

In some embodiments, performing the event operation may include identifying a maximum oil pressure residual from a first set of oil pressure residuals associated with the oil pressure residual data.

In some embodiments, performing the event operation may include identifying a minimum oil pressure residual from a second set of oil pressure residuals associated with the oil pressure residual data.

In some embodiments, performing the event operation may include determining an oil pressure residual range using the maximum oil pressure residual from the first set of oil pressure residuals associated with oil pressure residual data and the minimum oil pressure residual from the second set of oil pressure residuals associated with oil pressure residual data.

In some embodiments, performing the event operation may include, in an instance in which the oil pressure residual range is less than an oil pressure residual range threshold, adjusting at least a portion of the oil pressure residual data by performing a refinement operation on the oil pressure residual data.

In some embodiments, performing the refinement operation may include determining a mean value of a first portion of the oil pressure residual data, wherein the first portion of the oil pressure residual data is associated with a first time period, wherein the first time period occurs before the event.

In some embodiments, performing the refinement operation may include determining a mean value of a second portion of the oil pressure residual data, wherein the second portion of the oil pressure residual data is associated with a second time period, wherein the second time period occurs after the event.

In some embodiments, performing the refinement operation may include adjusting the second portion of the oil pressure residual data such that the mean value of the second portion of the oil pressure residual data is equal to the mean value of the first portion of the oil pressure residual data.

In some embodiments, the engine is an aircraft engine.

In some embodiments, initiating performance of one or more responsive actions based at least in part on the erratic oil pressure data may include initiating performance of a maintenance action for the carbon seal.

In accordance with another aspect of the disclosure, a computer program product is provided. In some embodiments, the computer program product includes at least one non-transitory computer-readable storage medium having computer program code stored thereon. In some embodiments, the computer program code, in execution with at least one processor, configures the computer program product to initiate performance of a maintenance action for the carbon seal. In some embodiments, the computer program code, in execution with at least one processor, configures the computer program product to generate adjusted oil pressure data by an engine speed or an ambient pressure. In some embodiments, the computer program code, in execution with at least one processor, configures the computer program product to generate, by applying the adjusted oil pressure data to an oil pressure residual model, oil pressure residual data indicative of one or more oil pressure residuals. In some embodiments, the computer program code, in execution with at least one processor, configures the computer program product to generate, by performing a windowing operation on the oil pressure residual data, erratic oil pressure data for a carbon seal associated with the engine. In some embodiments, the computer program code, in execution with at least one processor, configures the computer program product to initiate performance of one or more responsive actions based at least in part on the erratic oil pressure data.

In some embodiments, the oil pressure data is indicative of a differential pressure.

In some embodiments, the differential pressure is indicative of a difference between a first pressure associated with an oil pump and a second pressure associated with a sump scavenge.

In some embodiments, a first portion of the oil pressure data is identified from a first engine control unit associated with the engine and a second portion of the oil pressure data is identified from a second engine control unit associated with the engine.

In some embodiments, the computer program code, in execution with at least one processor, configures the computer program product to filter the oil pressure data to remove at least a portion of the oil pressure data from the oil pressure data.

In some embodiments, performing the windowing operation on the oil pressure residual data may include identifying a maximum oil pressure residual associated with the oil pressure residual data.

In some embodiments, performing the windowing operation on the oil pressure residual data may include identifying a minimum oil pressure residual associated with the oil pressure residual data.

In some embodiments, performing the windowing operation on the oil pressure residual data may include determining an oil pressure residual range using the maximum oil pressure residual associated with the oil pressure residual data and the minimum oil pressure residual associated with oil pressure residual data.

In some embodiments, performing the windowing operation on the oil pressure residual data may include determining if the oil pressure residual range is greater than an oil pressure residual range threshold.

In some embodiments, the computer program code, in execution with at least one processor, configures the computer program product to perform an event operation.

In some embodiments, performing the event operation may include parsing the oil pressure residual data using an event detection model to identify an event.

In some embodiments, performing the event operation may include identifying a maximum oil pressure residual from a first set of oil pressure residuals associated with the oil pressure residual data.

In some embodiments, performing the event operation may include identifying a minimum oil pressure residual from a second set of oil pressure residuals associated with the oil pressure residual data.

In some embodiments, performing the event operation may include determining an oil pressure residual range using the maximum oil pressure residual from the first set of oil pressure residuals associated with oil pressure residual data and the minimum oil pressure residual from the second set of oil pressure residuals associated with oil pressure residual data.

In some embodiments, performing the event operation may include, in an instance in which the oil pressure residual range is less than an oil pressure residual range threshold, adjusting at least a portion of the oil pressure residual data by performing a refinement operation on the oil pressure residual data.

In some embodiments, performing the refinement operation may include determining a mean value of a first portion of the oil pressure residual data, wherein the first portion of the oil pressure residual data is associated with a first time period, wherein the first time period occurs before the event.

In some embodiments, performing the refinement operation may include determining a mean value of a second portion of the oil pressure residual data, wherein the second portion of the oil pressure residual data is associated with a second time period, wherein the second time period occurs after the event.

In some embodiments, performing the refinement operation may include adjusting the second portion of the oil pressure residual data such that the mean value of the second portion of the oil pressure residual data is equal to the mean value of the first portion of the oil pressure residual data.

In some embodiments, the engine is an aircraft engine.

In some embodiments, initiating performance of one or more responsive actions based at least in part on the erratic oil pressure data may include initiating performance of a maintenance action for the carbon seal.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 illustrates an exemplary block diagram of an environment in which embodiments of the present disclosure may operate;
FIG. 2 illustrates an exemplary block diagram of an example apparatus that may be specially configured in accordance with an example embodiment of the present disclosure;
FIG. 3 illustrates an example visualization in accordance with one or more embodiments of the present disclosure;
FIG. 4 illustrates an example visualization in accordance with one or more embodiments of the present disclosure;
FIG. 5 illustrates an example interface in accordance with one or more embodiments of the present disclosure; and
FIG. 6 illustrates a flowchart of an example method in accordance with one or more embodiments of the present disclosure.

### DETAILED DESCRIPTION

Some embodiments of the present disclosure will now be described more fully herein with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The use of the term "circuitry" as used herein with respect to components of a system, or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communication circuitry, input/output circuitry, and the like. In some embodiments, other elements may provide or supplement the functionality of particular circuitry. Alternatively, or additionally, in some embodiments, other elements of a system and/or apparatus described herein may provide or supplement the functionality of another particular set of circuitry. For example, a processor may provide processing functionality to any of the sets of circuitry, a memory may provide storage functionality to any of the sets of circuitry, communications circuitry may provide network interface functionality to any of the sets of circuitry, and/or the like.

### Overview

Example embodiments disclosed herein include systems, apparatuses, methods, and computer program products for initiating performance of one or more responsive actions based at least in part on erratic oil pressure data. As would be understood by one skilled in the field to which this disclosure pertains, there are numerous example scenarios in which systems, apparatuses, methods, and computer program products for initiating performance of one or more responsive actions based at least in part on erratic oil pressure data are desirable.

In many applications, in may be desirable to have systems, apparatuses, methods, and computer program products for identifying and addressing a carbon seal associated with an unacceptable amount of wear, such as a carbon seal in an aircraft engine. In some examples, it may be desirable to have systems, apparatuses, methods, and computer program products for initiating performance of one or more responsive actions based at least in part on erratic oil pressure data to identify and address a carbon seal associated with an unacceptable amount of wear. For example, it may be desirable to generate erratic oil pressure data in order to identify whether one or more responsive actions are desired. As another example, it may be desirable to initiate performance of one or more responsive actions, such as a maintenance action, in order to address a carbon seal associated with an unacceptable amount of wear.

Example solutions for identifying and addressing a carbon seal associated with an unacceptable amount of wear include performing periodic maintenance on carbon seals and/or addressing failed carbon seals. However, such example solutions are inefficient, imprecise, and may result in accidents (e.g., accidents associated with aircraft engines due to a failed carbon seal). For example, by performing periodic maintenance of carbon seals, unnecessary maintenance may be performed on carbon seals that are not associated with an unacceptable amount of wear (e.g., only carbon seals associated with an unacceptable amount of wear may need maintenance). As another example, by performing periodic maintenance of carbon seals, carbon seals associated with an unacceptable amount of wear may not be addressed as soon as the carbon seals are associated with an unacceptable amount of wear (e.g., a carbon seal may become associated with an unacceptable amount of wear in between maintenance actions). As another example, addressing failed carbon seals may result in costly repairs and/or accidents because a carbon seal associated with an unacceptable amount of wear may fail before the carbon seal is addressed by maintenance (e.g., a carbon seal failure may damage an aircraft engine).

Thus, to address these and/or other issues related to identifying and addressing a carbon seal associated with an unacceptable amount of wear, example systems, apparatuses, methods, and computer program products for initiating performance of one or more responsive actions based at least in part on erratic oil pressure data are disclosed herein. For example, an embodiment in this disclosure, described in greater detail below, includes a method that includes identifying oil pressure data associated with an engine. In some embodiments, the method includes generating adjusted oil pressure data by adjusting oil pressure data by an engine speed or an ambient pressure. In some embodiments, the method includes generating, by applying the adjusted oil pressure data to an oil pressure residual model, oil pressure residual data indicative of one or more oil pressure residuals, generating, by performing a windowing operation on the oil pressure residual data, erratic oil pressure data for a carbon seal associated with the engine, In some embodiments, the method includes initiating performance of one or more responsive actions based at least in part on the erratic oil pressure data. Accordingly, the systems, apparatuses, methods, and computer program products disclosed herein enable efficient, precise, and safe identification and addressment of a carbon seal associated with an unacceptable amount of wear, such as a carbon seal in an aircraft engine.

### Example Systems and Apparatuses

Embodiments of the present disclosure herein include systems, apparatuses, methods, and computer program products configured for initiating performance of one or more responsive actions based at least in part on erratic oil pressure data. It should be readily appreciated that the embodiments of the apparatus, systems, methods, and computer program product described herein may be configured in various additional and alternative manners in addition to those expressly described herein.

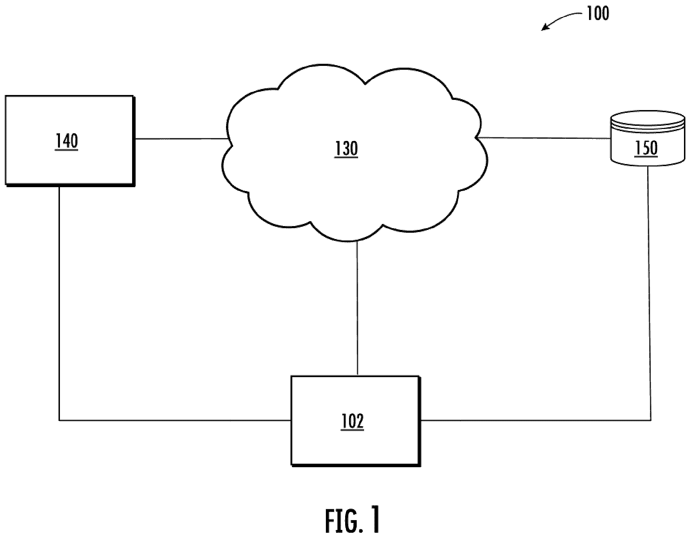

FIG. 1 illustrates an exemplary block diagram of an environment 100 in which embodiments of the present disclosure may operate. Specifically, FIG. 1 illustrates an asset 102. In some embodiments, for example, the asset 102 may be an engine and/or a computing device associated with an engine. In some embodiments, such as when the asset 102 is an engine, the engine may be an aircraft engine. For example, the engine may be a turbofan engine. Additionally, or alternatively, the asset 102 may be a computing device associated with an engine. For example, when the asset 102 is a computing device, the asset 102 may be a computing device of an aircraft that includes an engine (e.g., the computing device may be an onboard component of the aircraft). As another example, when the asset 102 is a computing device, the asset 102 may be a computing device used to perform maintenance on the engine. As another example, when the asset 102 is a computing device, the asset 102 may be an engine control unit of an engine.

The network 130 may be embodied in any of a myriad of network configurations. In some embodiments, the network 130 may be a public network (e.g., the Internet). In some embodiments, the network 130 may be a private network (e.g., an internal localized, or closed-off network between particular devices). In some other embodiments, the network 130 may be a hybrid network (e.g., a network enabling internal communications between particular connected devices and external communications with other devices). In various embodiments, the network 130 may include one or more base station(s), relay(s), router(s), switch(es), cell tower(s), communications cable(s), routing station(s), and/or the like. In various embodiments, components of the environment 100 may be communicatively coupled to transmit data to and/or receive data from one another over the network 130. Such configuration(s) include, without limitation, a wired or wireless Personal Area Network (PAN), Local Area Network (LAN), Metropolitan Area Network (MAN), Wide Area Network (WAN), and/or the like.

In some embodiments, the environment 100 may include an engine optimization system 140. In some embodiments, for example, the engine optimization system 140 may be configured to initiating performance of one or more responsive actions based at least in part on erratic oil pressure data. The engine optimization system 140 may be electronically and/or communicatively coupled to the asset 102, individual components of the asset 102, and/or one or more databases 150. The engine optimization system 140 may be located remotely, in proximity of, and/or within the asset 102. In some embodiments, the engine optimization system 140 is configured via hardware, software, firmware, and/or a combination thereof, to perform data intake of one or more types of data associated with one or more of the asset 102, individual components of the asset 102, and/or one or more databases 150. Additionally, or alternatively, in some embodiments, the engine optimization system 140 is configured via hardware, software, firmware, and/or a combination thereof, to generate and/or transmit command(s) that control, adjust, or otherwise impact operations of one or more of the asset 102, individual components of the asset 102, and/or one or more databases 150, for example for controlling one or more operations of the asset 102. Additionally or alternatively still, in some embodiments, the engine optimization system 140 is configured via hardware, software, firmware, and/or a combination thereof, to perform data reporting and/or other data output process(es) associated with monitoring or otherwise analyzing operations of one or more of the asset 102, individual components of the asset 102, and/or one or more databases 150 thereof, for example for generating and/or outputting report(s) corresponding to the operations performed via the asset 102. For example, in various embodiments, the engine optimization system 140 may be configured to execute and/or perform one or more operations and/or functions described herein.

The one or more databases 150 may be configured to receive, store, and/or transmit data. In some embodiments, the one or more databases 150 may be associated with oil pressure data, adjusted oil pressure data, oil pressure residual data, erratic oil pressure data, and/or the like. In this regard, for example, the asset 102 may have one or more sensors that capture oil pressure data, adjusted oil pressure data, oil pressure residual data, erratic oil pressure data, and/or the like and/or one or more datastores that store oil pressure data, adjusted oil pressure data, oil pressure residual data, erratic oil pressure data, and/or the like. In some embodiments, the oil pressure data, adjusted oil pressure data, oil pressure residual data, erratic oil pressure data, and/or the like may be received from the engine optimization system 140. In this regard, for example, the engine optimization system 140 may be configured to identify oil pressure data, adjusted oil pressure data, oil pressure residual data, erratic oil pressure data, and/or the like. In some embodiments, the one or more databases 150 may be associated with oil pressure data, adjusted oil pressure data, oil pressure residual data, erratic oil pressure data, and/or the like received from the asset 102 and/or the engine optimization system 140 in real-time. Additionally, or alternatively, the one or more databases 150 may be associated with oil pressure data, adjusted oil pressure data, oil pressure residual data, erratic oil pressure data, and/or the like received from the asset 102 and/or the engine optimization system 140 on a periodic basis (e.g., the oil pressure data, adjusted oil pressure data, oil pressure residual data, erratic oil pressure data, and/or the like may be received from the asset 102 and/or the engine optimization system 140 once per day). Additionally, or alternatively, the one or more databases 150 may be associated with oil pressure data, adjusted oil pressure data, oil pressure residual data, erratic oil pressure data, and/or the like received from the asset 102 and/or the engine optimization system 140 in response to a request for the oil pressure data, adjusted oil pressure data, oil pressure residual data, erratic oil pressure data, and/or the like. Additionally, or alternatively, the one or more databases 150 may be associated with oil pressure data, adjusted oil pressure data, oil pressure residual data, erratic oil pressure data, and/or the like inputted (e.g., by a user) into the engine optimization system 140.

Additionally, while FIG. 1 illustrates certain components as separate, standalone entities communicating over the network 130, various embodiments are not limited to this configuration. In other embodiments, one or more components may be directly connected and/or share hardware or the like. For example, in some embodiments, the engine optimization system 140 may include the one or more databases 150, which may collectively be located in or at the asset 102. As another example, the engine optimization system 140, the one or more databases 150, and/or the asset 102 may be directly connected.

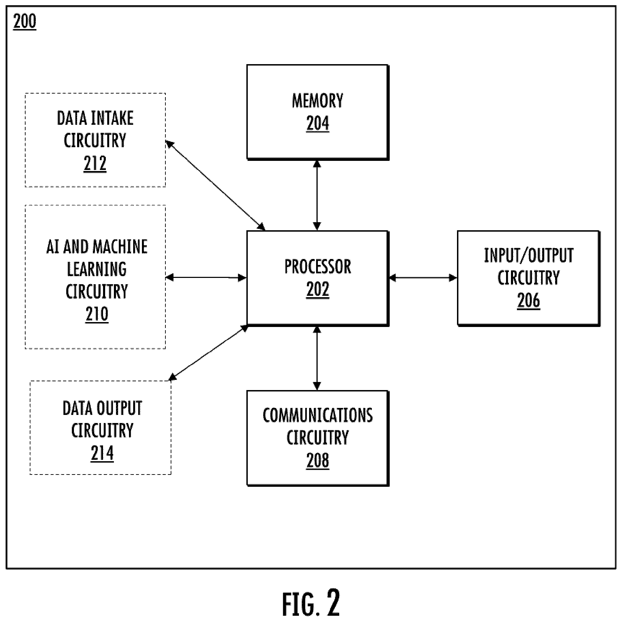

FIG. 2 illustrates an exemplary block diagram of an example apparatus that may be specially configured in accordance with an example embodiment of the present disclosure. Specifically, FIG. 2 depicts an example computing apparatus 200 ("apparatus 200") specially configured in accordance with at least some example embodiments of the present disclosure. For example, the computing apparatus 200 may be embodied as one or more of a specifically configured personal computing apparatus, a specifically configured cloud-based computing apparatus, a specifically configured embedded computing device (e.g., configured for edge computing, and/or the like). Examples of an apparatus 200 may include, but is not limited to, an engine optimization system 140, and/or the one or more databases 150. The apparatus 200 includes processor 202, memory 204, input/output circuitry 206, communications circuitry 208, and/or optional artificial intelligence ("AI") and machine learning circuitry 210. In some embodiments, the apparatus 200 is configured to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), memory(ies), circuitry(ies), and/or the like to perform their associated functions such that duplicate hardware is not required for each set of circuitry.

In various embodiments, such as computing apparatus 200 of an engine optimization system 140 may refer to, for example, one or more computers, computing entities, desktop computers, mobile phones, tablets, phablets, notebooks, laptops, distributed systems, servers, or the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein. In one embodiment, these functions, operations, and/or processes can be performed on data, content, information, and/or similar terms used herein. In this regard, the apparatus 200 embodies a particular, specially configured computing entity transformed to enable the specific operations described herein and provide the specific advantages associated therewith, as described herein.

Processor 202 or processor circuity 202 may be embodied in a number of different ways. In various embodiments, the use of the terms "processor" should be understood to include a single core processor, a multi-core processor, multiple processors internal to the apparatus 200, and/or one or more remote or "cloud" processor(s) external to the apparatus 200. In some example embodiments, processor 202 may include one or more processing devices configured to perform independently. Alternatively, or additionally, processor 202 may include one or more processor(s) configured in tandem via a bus to enable independent execution of operations, instructions, pipelining, and/or multithreading.

In an example embodiment, the processor 202 may be configured to execute instructions stored in the memory 204 or otherwise accessible to the processor. Alternatively, or additionally, the processor 202 may be configured to execute hard-coded functionality. As such, whether configured by hardware or software methods, or by a combination thereof, processor 202 may represent an entity (e.g., physically embodied in circuitry) capable of performing operations according to embodiments of the present disclosure while configured accordingly. Alternatively, or additionally, processor 202 may be embodied as an executor of software instructions, and the instructions may specifically configure the processor 202 to perform the various algorithms embodied in one or more operations described herein when such instructions are executed. In some embodiments, the processor 202 includes hardware, software, firmware, and/or a combination thereof that performs one or more operations described herein.

In some embodiments, the processor 202 (and/or co-processor or any other processing circuitry assisting or otherwise associated with the processor) is/are in communication with the memory 204 via a bus for passing information among components of the apparatus 200.

Memory 204 or memory circuitry 204 may be non-transitory and may include, for example, one or more volatile and/or non-volatile memories. In some embodiments, the memory 204 includes or embodies an electronic storage device (e.g., a computer readable storage medium). In some embodiments, the memory 204 is configured to store information, data, content, applications, instructions, or the like, for enabling an apparatus 200 to carry out various operations and/or functions in accordance with example embodiments of the present disclosure.

Input/output circuitry 206 may be included in the apparatus 200. In some embodiments, input/output circuitry 206 may provide output to the user and/or receive input from a user. The input/output circuitry 206 may be in communication with the processor 202 to provide such functionality. The input/output circuitry 206 may comprise one or more user interface(s). In some embodiments, a user interface may include a display that comprises the interface(s) rendered as a web user interface, an application user interface, a user device, a backend system, or the like. In some embodiments, the input/output circuitry 206 also includes a keyboard, a mouse, a j oystick, a touch screen, touch areas, soft keys a microphone, a speaker, or other input/output mechanisms. The processor 202 and/or input/output circuitry 206 comprising the processor may be configured to control one or more operations and/or functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a computing device and/or other display associated with a user.

Communications circuitry 208 may be included in the apparatus 200. The communications circuitry 208 may include any means such as a device or circuitry embodied in either hardware or a combination of hardware and software that is configured to receive and/or transmit data from/to a network and/or any other device, circuitry, or module in communication with the apparatus 200. In some embodiments the communications circuitry 208 includes, for example, a network interface for enabling communications with a wired or wireless communications network. Additionally, or alternatively, the communications circuitry 208 may include one or more network interface card(s), antenna(s), bus(es), switch(es), router(s), modem(s), and supporting hardware, firmware, and/or software, or any other device suitable for enabling communications via one or more communications network(s). In some embodiments, the communications circuitry 208 may include circuitry for interacting with an antenna(s) and/or other hardware or software to cause transmission of signals via the antenna(s) and/or to handle receipt of signals received via the antenna(s). In some embodiments, the communications circuitry 208 enables transmission to and/or receipt of data from a user device, one or more sensors, and/or other external computing device(s) in communication with the apparatus 200.

Data intake circuitry 212 may be included in the apparatus 200. The data intake circuitry 212 may include hardware, software, firmware, and/or a combination thereof, designed and/or configured to capture, receive, request, and/or otherwise gather data associated with operations of the asset 102. In some embodiments, the data intake circuitry 212 includes hardware, software, firmware, and/or a combination thereof, that communicates with one or more sensor(s) component(s), and/or the like within the asset 102 to receive particular data associated with such operations of the asset 102. Additionally, or alternatively, in some embodiments, the data intake circuitry 212 includes hardware, software, firmware, and/or a combination thereof, that retrieves particular data associated with the asset 102 from one or more data repository/repositories accessible to the apparatus 200.

AI and machine learning circuitry 210 may be included in the apparatus 200. The AI and machine learning circuitry 210 may include hardware, software, firmware, and/or a combination thereof designed and/or configured to request, receive, process, generate, and transmit data, data structures, control signals, and electronic information for training and executing a trained AI and machine learning model configured for facilitating the operations and/or functionalities described herein. For example, in some embodiments the AI and machine learning circuitry 210 includes hardware, software, firmware, and/or a combination thereof, that identifies training data and/or utilizes such training data for training a particular machine learning model, AI, and/or other model to generate particular output data using learnings from the training data. Additionally, or alternatively, in some embodiments, the AI and machine learning circuitry 210 includes hardware, software, firmware, and/or a combination thereof, that embodies or retrieves a trained machine learning model, AI and/or other specially configured model utilized to process inputted data. Additionally, or alternatively, in some embodiments, the AI and machine learning circuitry 210 includes hardware, software, firmware, and/or a combination thereof that processes received data utilizing one or more algorithm(s), function(s), subroutine(s), and/or the like, in one or more pre-processing and/or subsequent operations that need not utilize a machine learning or AI model.

Data output circuitry 214 may be included in the apparatus 200. The data output circuitry 214 may include hardware, software, firmware, and/or a combination thereof, that configures and/or generates an output based at least in part on data processed by the apparatus 200. In some embodiments, the data output circuitry 214 includes hardware, software, firmware, and/or a combination thereof, that generates a particular report based at least in part on the processed data, for example where the report is generated based at least in part on a particular reporting protocol. Additionally, or alternatively, in some embodiments, the data output circuitry 214 includes hardware, software, firmware, and/or a combination thereof, that configures a particular output data object, output data file, and/or user interface for storing, transmitting, and/or displaying. For example, in some embodiments, the data output circuitry 214 generates and/or specially configures a particular data output for transmission to another system sub-system for further processing. Additionally, or alternatively, in some embodiments, the data output circuitry 214 includes hardware, software, firmware, and/or a combination thereof, that causes rendering of a specially configured user interface based at least in part on data received by and/or processing by the apparatus 200.

In some embodiments, two or more of the sets of circuitries 202-214 are combinable. Alternatively, or additionally, one or more of the sets of circuitry 202-214 perform some or all of the operations and/or functionality described herein as being associated with another circuitry. In some embodiments, two or more of the sets of circuitry 202-214 are combined into a single module embodied in hardware, software, firmware, and/or a combination thereof. For example, in some embodiments, one or more of the sets of circuitry, for example the AI and machine learning circuitry 210, may be combined with the processor 202, such that the processor 202 performs one or more of the operations described herein with respect to the AI and machine learning circuitry 210.

With reference to FIGS. 1-5, the engine optimization system 140 may be configured to identify oil pressure data associated with the asset 102. For example, the engine optimization system may be configured to identify oil pressure data associated with an engine. In some embodiments, oil pressure data may be one or more items of data representative of and/or associated with an oil pressure associated with the asset 102. For example, oil pressure data may be one or more items of data representative of and/or associated with an oil pressure associated with an engine, such as an aircraft engine. In this regard, for example, oil pressure data may be representative of and/or associated with one or more oil pressure measurements associated with the asset 102. For example, oil pressure data may be representative of and/or associated with one or more oil pressure measurements associated with an engine.

In some embodiments, the engine optimization system 140 may be configured to identify at least a portion (e.g., a first portion) of oil pressure data from a first engine control unit associated with the asset 102 (e.g., a primary engine control unit associated with the asset 102). In this regard, the first engine control unit may be configured to generate at least a portion of the oil pressure data. In some embodiments, the portion of oil pressure data identified from the first engine control unit may be associated with a left channel oil pressure. In some embodiments, the engine optimization system 140 may be configured to identify at least a portion (e.g., a second portion) of oil pressure data from a second engine control unit associated with the asset 102 (e.g., a backup engine control unit associated with the asset 102). In this regard, the second engine control unit may be configured to generate at least a portion of the oil pressure data. In some embodiments, the portion of oil pressure data identified from the second engine control unit may be associated with a right channel oil pressure.

In some embodiments, the oil pressure data may be indicative of a differential pressure. In this regard, the oil pressure data may be indicative of a difference between a first pressure associated with an oil pump and a second pressure associated with a sump scavenge. In this regard, an oil pressure associated with the oil pressure data may decrease when the first pressure decreases and/or when the second pressure increases. Additionally, or alternatively, an oil pressure associated with the oil pressure data may increase when the first pressure increases and/or when the second pressure decreases. In some embodiments, as a carbon seal associated with the asset 102 (e.g., a carbon seal in an engine) begins to wear, the second pressure may increase, which may result in a decrease in an oil pressure associated with the oil pressure data.

In some embodiments, the engine optimization system 140 may be configured to filter oil pressure data. In some embodiments, filtering the oil pressure data may remove at least a portion of the oil pressure data from the oil pressure data. In this regard, the oil pressure data may include one or more erroneous and/or default oil pressure measurements and the engine optimization system 140 may be configured to filter the oil pressure data to remove erroneous and/or default oil pressure measurements in the oil pressure data.

In some embodiments, the engine optimization system 140 may be configured to generate adjusted oil pressure data. In some embodiments, the engine optimization system 140 may be configured to generate adjusted oil pressure data by adjusting oil pressure data by an engine speed. For example, the oil pressure data may be adjusted by an engine speed associated with the asset 102 (e.g., an engine). In this regard, for example, the engine optimization system 140 may be configured to normalize the oil pressure data by an engine speed associated with the asset 102. That is, for example, by normalizing the oil pressure data by an engine speed associated with the asset 102 any changes in engine speed associated with the asset 102 will not improperly impact the initiation of one or more responsive actions by the engine optimization system 140. Additionally, or alternatively, the engine optimization system 140 may be configured to generate adjusted oil pressure data by adjusting oil pressure data by an ambient pressure. For example, the oil pressure data may be adjusted by an ambient pressure associated with the asset 102. In this regard, the engine optimization system 140 may be configured to normalize the oil pressure data by an ambient pressure associated with the asset 102. That is, for example, by normalizing the oil pressure data by an ambient pressure associated with the asset 102 any changes in ambient pressure associated with the asset 102 will not improperly impact the initiation of one or more responsive actions by the engine optimization system 140.

In some embodiments, the engine optimization system 140 may be configured to generate oil pressure residual data indicative of one or more oil pressure residuals. In some embodiments, oil pressure residual data may be one or more items of data representative of and/or associated with one or more oil pressure residuals associated with one or more corresponding oil pressure measurements associated with oil pressure data. In this regard, an oil pressure residual may represent a perpendicular distance between an expected value of an oil pressure measurement at a particular oil temperature.

In some embodiments, the engine optimization system 140 may be configured to generate oil pressure residual data by applying adjusted oil pressure data to an oil pressure residual model. In some embodiments, an oil pressure residual model may be a data entity that describes parameters, hyper-parameters, and/or defined operations of a rules-based, and/or machine learning model (e.g., model including at least one of one or more rule-based layers, one or more layers that depend on trained parameters, coefficients, and/or the like) configured to at least in part generate oil pressure residual data. The oil pressure residual model may utilize one or more of any type of machine learning and/or rules-based techniques including one or more of supervised learning (e.g., using user feedback), unsupervised learning, semi-supervised learning, reinforcement learning, computer vision techniques, sequence modeling techniques, language processing techniques, and/or neural network techniques.

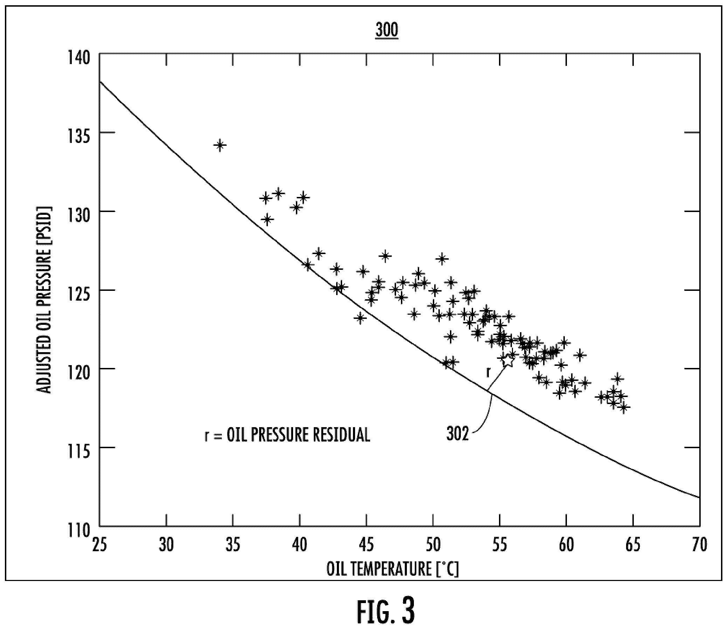

In some embodiments, the engine optimization system 140 may be configured to generate and/or display a visualization of oil pressure residual data. For example, FIG. 3 illustrates an example visualization 300 that illustrates an example oil pressure residual (r) (e.g., a perpendicular distance between an expected value of an oil pressure measurement at a particular temperature 302). In some embodiments, the engine optimization system 140 may be configured to generate a visualization of oil pressure residual data using the oil pressure residual model.

In some embodiments, the engine optimization system 140 may be configured to generate erratic oil pressure data. In some embodiments, erratic oil pressure data may be one or more items of data indicative of whether a carbon seal is associated with an unacceptable amount of wear. For example, erratic oil pressure data may be one or more items of data indicative of whether a carbon seal associated with the asset 102 (e.g., a carbon seal in an engine, such as a carbon seal in an aircraft engine) is associated with an unacceptable amount of wear. In some embodiments, a carbon seal suffering from an unacceptable amount of wear may be a carbon seal that is close to failing, has failed, and/or is negatively impacting the performance of the asset 102.

In some embodiments, erratic oil pressure data may indicate that a carbon seal is associated with an unacceptable amount of wear when an oil pressure residual range is greater than an oil pressure residual range threshold (e.g., a carbon seal is impacted by an unacceptable amount of wear when an oil pressure residual range is greater than an oil pressure residual range threshold). Additionally, or alternatively, erratic oil pressure data may indicate that a carbon seal is not associated with an unacceptable amount of wear when an oil pressure residual range is less than an oil pressure residual range threshold (e.g., a carbon seal is not impacted by an unacceptable amount of wear when an oil pressure residual range is less than an oil pressure residual range threshold).

In some embodiments, the engine optimization system 140 may be configured to generate erratic oil pressure data by performing a windowing operation on the oil pressure residual data. In some embodiments, the engine optimization system 140 may be configured to generate erratic oil pressure data by performing a windowing operation on the oil pressure residual data due to one or more properties associated with the asset 102 (e.g., physical properties, chemical properties, and/or electrical properties associated with the asset 102). For example, by identifying a single minimum oil pressure residual (e.g., by performing a windowing operation), the engine optimization system 140 may be configured to determine that the asset 102 is operating with the carbon seal in the carbon seal's axial location, which allows more buffer air to flow past the carbon seal. In this regard, for example, performing a windowing operation to generate erratic oil pressure data for a carbon seal associated with the asset 102 may be preferred over performing one or more other operations to generate erratic oil pressure data. For example, performing a windowing operation to generate erratic oil pressure data may be preferred over performing a standard deviation operation.

In some embodiments, performing a windowing operation may include the engine optimization system 140 being configured to identify a maximum oil pressure residual associated with the oil pressure residual data. In this regard, for example, a maximum oil pressure residual may be the oil pressure residual in the oil pressure residual data associated with the highest oil pressure residual (e.g., an oil pressure residual of approximately 20 pounds per square inch). In some embodiments, performing a windowing operation may include the engine optimization system 140 being configured to identify a minimum oil pressure residual associated with the oil pressure residual data. In this regard, for example, a minimum oil pressure residual may be the oil pressure residual in the oil pressure residual data associated with the lowest oil pressure residual (e.g., an oil pressure residual of approximately 5 pounds per square inch).

In some embodiments, performing a windowing operation may include the engine optimization system 140 being configured to determine an oil pressure residual range. In some embodiments, an oil pressure residual range may be determined using a maximum oil pressure residual associated with oil pressure residual data and a minimum oil pressure residual associated with oil pressure residual data. In this regard, for example, an oil pressure residual range may represent a difference between a maximum oil pressure residual and a minimum oil pressure residual. For example, an oil pressure residual range may be approximately 15 when a minimum oil pressure residual is associated with an oil pressure residual of 5 pounds per square inch and a maximum oil pressure residual is associated with an oil pressure residual of 20 pounds per square inch.

In some embodiments, performing a windowing operation may include the engine optimization system 140 being configured to determine if an oil pressure residual range is greater than an oil pressure range threshold. For example, if an oil pressure residual range is approximately 15 and an oil pressure range threshold approximately 10, the oil pressure residual range may be greater than the oil pressure range threshold. In this regard, performing a windowing operation may include generating erratic oil pressure data that indicates that a carbon seal is associated with an unacceptable amount of wear (e.g., when the oil pressure residual range is greater than an oil pressure range threshold). As another example, if an oil pressure residual range is approximately 8 and an oil pressure range threshold is approximately 10, the oil pressure residual range may be less than the oil pressure range threshold. In this regard, performing a windowing operation may include generating erratic oil pressure data that indicates that a carbon seal is not associated with an unacceptable amount of wear.

In some embodiments, the engine optimization system 140 may be configured to perform an event operation. In some embodiments, an event may be indicative of a shift in a mean value of oil pressure residual data. In this regard, in some embodiments, an event may be indicative of wear of a carbon seal associated with the asset 102 (e.g., if the event results in the oil pressure residual range changing such that the oil pressure residual range is greater than an oil pressure residual range threshold). Additionally, or alternatively, in some embodiments, an event may indicate some other change with the asset 102 that is not indicative of wear of a carbon seal associated with the asset 102 (e.g., if the event results in the oil pressure residual range changing such that the oil pressure residual range is less than an oil pressure residual range threshold). For example, such an event may indicate a pressure adjustment valve (PAV) adjustment associated with the asset 102. As another example, such an event may indicate a failed O-ring. As another example, such an event may indicate a sensor fault. As another example, such an event may indicate an oil pump fault. In this regard, the engine optimization system 140 may be configured to perform an event operation to identify and/or account for events that are not indicative of wear of a carbon seal associated with the asset 102. In some embodiments, a windowing operation may be performed after an event operation has been performed. For example, an oil pressure residual range may be determined as part of a windowing operation after an event operation has been performed.

In some embodiments, performing an event operation may include the engine optimization system 140 being configured to parse the oil pressure residual data to identify an event. In some embodiments, the engine optimization system 140 may be configured to parse the oil pressure residual data to identify an event using an event detection model. In some embodiments, an event detection model may be a data entity that describes parameters, hyper-parameters, and/or defined operations of a rules-based, and/or machine learning model (e.g., model including at least one of one or more rule-based layers, one or more layers that depend on trained parameters, coefficients, and/or the like) configured to at least in part identify an event associated with the oil pressure residual data. The event detection model may utilize one or more of any type of machine learning and/or rules-based techniques including one or more of supervised learning (e.g., using user feedback), unsupervised learning, semi-supervised learning, reinforcement learning, computer vision techniques, sequence modeling techniques, language processing techniques, and/or neural network techniques.

In some embodiments, performing an event operation may include the engine optimization system 140 being configured to identify a maximum oil pressure residual from a first set of oil pressure residuals associated with the oil pressure residual data. In some embodiments, the first set of oil pressure residuals may be associated with a first time period (e.g., a time period before the event). In this regard for example, the first set of oil pressure residuals may be a number of oil pressure residuals that are identified as being the closest to the occurrence of the event that are associated with the first time period. For example, the first set of oil pressure residuals may include 10 oil pressure residuals in the oil pressure residual data that are identified as being the closest to the occurrence of the event that are associated with the first time period. In some embodiments, a maximum oil pressure residual from the first set of oil pressure residuals may be the oil pressure residual in the first set of oil pressure residuals associated with the highest oil pressure residual (e.g., an oil pressure residual of approximately 12 pounds per square inch).

In some embodiments, performing an event operation may include the engine optimization system 140 being configured to identify a minimum oil pressure residual from a second set of oil pressure residuals associated with the oil pressure residual data. In some embodiments, the second set of oil pressure residuals may be associated with a second time period (e.g., a time period after the event). In this regard for example, the second set of oil pressure residuals may be a number of oil pressure residuals that are identified as being the closest to the occurrence of the event that are associated with the second time period. For example, the second set of oil pressure residuals may include 10 oil pressure residuals in the oil pressure residual data that are identified as being the closest to the occurrence of the event that are associated with the second time period. In some embodiments, a minimum oil pressure residual from the second set of oil pressure residuals may be the oil pressure residual in the second set of oil pressure residuals associated with the lowest oil pressure residual (e.g., an oil pressure residual of approximately 8 pounds per square inch).

In some embodiments, performing an event operation may include the engine optimization system 140 being configured to determine an oil pressure residual range. In some embodiments, an oil pressure residual range may be determined using a maximum oil pressure residual from the first set of oil pressure residuals associated with oil pressure residual data and a minimum oil pressure residual from the second set of oil pressure residuals associated with oil pressure residual data. In this regard, for example, an oil pressure residual range may represent a difference between a maximum oil pressure residual and a minimum oil pressure residual. For example, an oil pressure residual range may be approximately 4 when a minimum oil pressure residual from the second set is associated with an oil pressure residual of 8 pounds per square inch and a maximum oil pressure residual from the first set is associated with an oil pressure residual of 12 pounds per square inch.

In some embodiments, performing an event operation may include the engine optimization system 140 being configured to determine if an oil pressure residual range is less than an oil pressure range threshold. For example, if an oil pressure residual range is approximately 4 and an oil pressure range threshold is approximately 8, the oil pressure residual range may be less than the oil pressure range threshold.

In some embodiments, performing an event operation may include the engine optimization system 140 being configured to, in an instance in which the oil pressure residual range is less than an oil pressure residual range threshold, adjust at least a portion of the oil pressure residual data by performing a refinement operation on oil pressure residual data. In this regard, for example, the engine optimization system 140 may be configured to perform a refinement operation on oil pressure residual data.

In some embodiments, performing a refinement operation may include the engine optimization system 140 being configured to determine a mean value of a first portion of the oil pressure residual data. In some embodiments, the first portion of the oil pressure residual data may be associated with a first time period. In some embodiments, the first time period occurs before the event. In this regard, for example, the engine optimization system 140 may be configured to determine a mean value of the oil pressure residual data that includes oil pressure residuals from before the event.

In some embodiments, performing a refinement operation may include the engine optimization system 140 being configured to determine a mean value of a second portion of the oil pressure residual data. In some embodiments, the second portion of the oil pressure residual data may be associated with a second time period. In some embodiments, the second time period occurs after the event. In this regard, for example, the engine optimization system 140 may be configured to determine a mean value of the oil pressure residual data that includes oil pressure residuals from after the event.

In some embodiments, performing a refinement operation may include the engine optimization system 140 being configured to adjust the second portion of the oil pressure residual data such that the mean value of the second portion of the oil pressure residual data is equal to the mean value of the first portion of the oil pressure residual data. Said differently, by performing a refinement operation, the engine optimization system 140 may be configured to adjust the second portion of the oil pressure residual data such that an event that may indicate some other change with the asset 102 that is not indicative of wear of a carbon seal associated with the asset 102 does not cause the engine optimization to mistakenly identify a carbon seals as being associated with an unacceptable amount of wear.

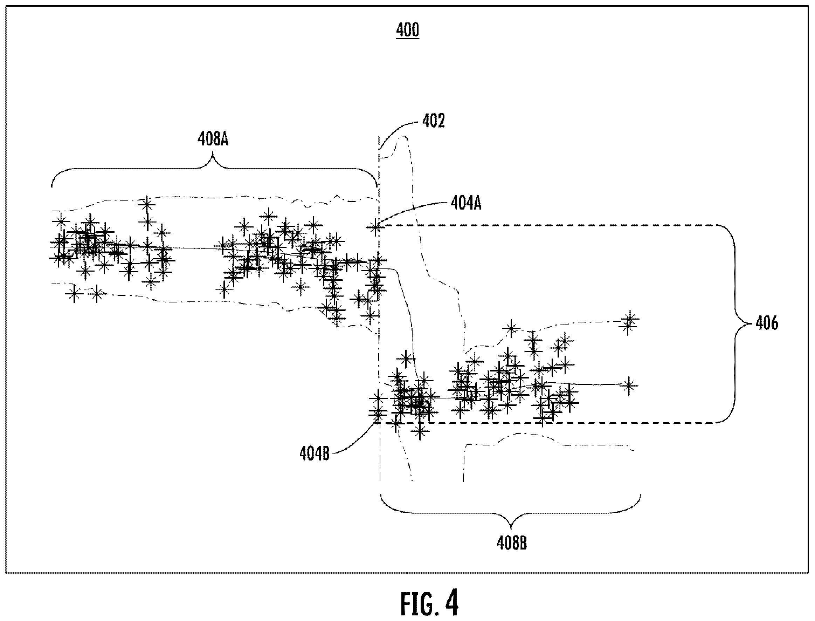

In some embodiments, the engine optimization system may be configured to generate and/or display a visualization of oil pressure residual data associated with an event. For example, FIG. 4 illustrates a visualization 400 of oil pressure residual data associated with an event. In this regard, for example, the visualization 400 may include a representation of the event 402. As another example, the visualization 400 may include a representation of a maximum oil pressure residual 404A. As another example, the visualization 400 may include a representation of a minimum oil pressure residual 404B. As another example, the visualization 400 may include a representation of an oil pressure residual range 406. As another example, the visualization 400 may include a representation of a first time period 408A (e.g., a time period before the event has occurred). As another example, the visualization 400 may include a representation of a second time period 408B (e.g., a time period after the event has occurred).

In some embodiments, the engine optimization system 140 may be configured to initiate performance of one or more responsive actions. In some embodiments, the engine optimization system 140 may be configured to initiate performance of one or more responsive actions based at least in part on erratic oil pressure data. In this regard, the engine optimization system 140 may be configured to initiate performance of one or more responsive actions when erratic oil pressure data indicates that a carbon seal is associated with an unacceptable amount of wear (e.g., when the erratic oil pressure data indicates that an oil pressure residual range is greater than an oil pressure residual range threshold).

In some embodiments, initiating performance of one or more responsive actions may include the engine optimization system 140 being configured to initiate performance of a maintenance action. In this regard, for example, initiating performance of a maintenance action may include triggering procurement of a replacement carbon seal for the carbon seal associated with an unacceptable amount of wear. As another example, initiating performance of a maintenance action may include causing the asset 102 to shut down (e.g., causing an engine to shut down to protect the engine from a carbon seal with an unacceptable amount of wear). As another example, initiating performance of a maintenance action may include causing settings of the asset 102 to be adjusted (e.g., causing the settings of an engine to be adjusted to protect the engine from a carbon seal with an unacceptable amount of wear).

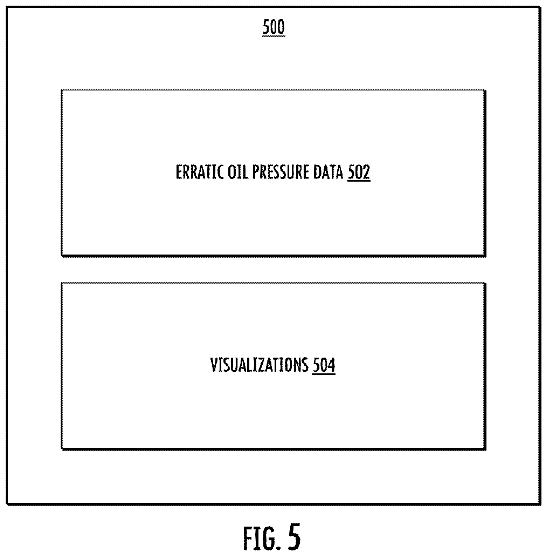

In some embodiments, initiating performance of one or more responsive actions may include the engine optimization system 140 being configured to cause erratic oil pressure data to be displayed on an interface. In this regard, FIG. 5 illustrates interface 500 configured to display erratic oil pressure data 502. Additionally, or alternatively, initiating performance of one or more responsive actions may include the engine optimization system 140 being configured to cause the one or more visualizations to be displayed on an interface. In this regard, as illustrated in FIG. 5, the interface 500 may be configured to display one or more visualizations 504. For example, the interface 500 may be configured to display one or more visualizations 504 that include the visualization 300 and/or the visualization 400. In some embodiments, the engine optimization system 140 may be configured to cause erratic oil pressure data 502 and the one or more visualizations 504 to be displayed proximate each other on the interface 500. Additionally, or alternatively, the engine optimization system 140 may be configured to cause erratic oil pressure data 502 to be at least partially overlaid on the one or more visualizations 504 on the interface 500.

In some embodiments, initiating performance of one or more responsive actions may include the engine optimization system 140 being configured to transmit an alert to one or more computing devices indicating that a carbon seal is affected by an unacceptable amount of wear. In some embodiments, the one or more computing devices may include a remote computing device. For example, the one or more computing devices may include the asset 102 (e.g., an onboard computing device of an aircraft associated with an engine that includes a carbon seal affected by unacceptable wear). As another example, the one or more computing devices may include a maintenance computer associated with a maintenance system used to perform maintenance on the asset 102.

### Example Methods

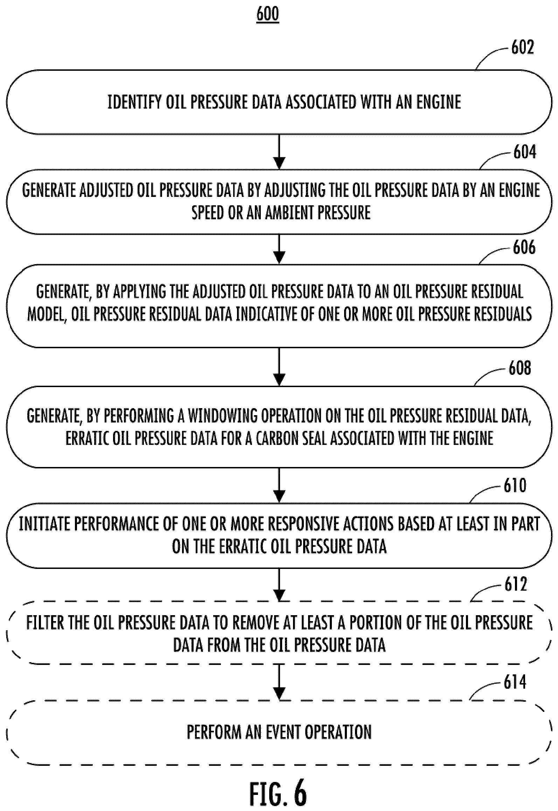

Referring now to FIG. 6, a flowchart providing an example method 600 is illustrated. In this regard, FIG. 6 illustrates operations that may be performed by the engine optimization system 140, the asset 102, and/or the like. In some embodiments, the example method 600 defines a process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 600.

As shown in block 602, the method 600 may include identifying oil pressure data associated with an engine. As described above, in some embodiments, the engine optimization system may be configured to identify oil pressure data associated with an engine. In some embodiments, oil pressure data may be one or more items of data representative of and/or associated with an oil pressure associated with the asset. For example, oil pressure data may be one or more items of data representative of and/or associated with an oil pressure associated with an engine, such as an aircraft engine. In this regard, for example, oil pressure data may be representative of and/or associated with one or more oil pressure measurements associated with the asset. For example, oil pressure data may be representative of and/or associated with one or more oil pressure measurements associated with an engine.

In some embodiments, the engine optimization system may be configured to identify at least a portion (e.g., a first portion) of oil pressure data from a first engine control unit associated with the asset (e.g., a primary engine control unit associated with the asset). In this regard, the first engine control unit may be configured to generate at least a portion of the oil pressure data. In some embodiments, the portion of oil pressure data identified from the first engine control unit may be associated with a left channel oil pressure. In some embodiments, the engine optimization system may be configured to identify at least a portion (e.g., a second portion) of oil pressure data from a second engine control unit associated with the asset (e.g., a backup engine control unit associated with the asset). In this regard, the second engine control unit may be configured to generate at least a portion of the oil pressure data. In some embodiments, the portion of oil pressure data identified from the second engine control unit may be associated with a right channel oil pressure.

In some embodiments, the oil pressure data may be indicative of a differential pressure. In this regard, the oil pressure data may be indicative of a difference between a first pressure associated with an oil pump and a second pressure associated with a sump scavenge. In this regard, an oil pressure associated with the oil pressure data may decrease when the first pressure decreases and/or when the second pressure increases. Additionally, or alternatively, an oil pressure associated with the oil pressure data may increase when the first pressure increases and/or when the second pressure decreases. In some embodiments, as a carbon seal associated with the asset (e.g., a carbon seal in an engine) begins to wear, the second pressure may increase, which may result in a decrease in an oil pressure associated with the oil pressure data.

As shown in block 604, the method 600 may include generating adjusted oil pressure data by adjusting the oil pressure data by an engine speed or an ambient pressure. As described above, in some embodiments, the engine optimization system may be configured to generate adjusted oil pressure data by adjusting oil pressure data by an engine speed. For example, the oil pressure data may be adjusted by an engine speed associated with the asset (e.g., an engine). In this regard, for example, the engine optimization system may be configured to normalize the oil pressure data by an engine speed associated with the asset. That is, for example, by normalizing the oil pressure data by an engine speed associated with the asset any changes in engine speed associated with the asset will not improperly impact the initiation of one or more responsive actions by the engine optimization system. Additionally, or alternatively, the engine optimization system may be configured to generate adjusted oil pressure data by adjusting oil pressure data by an ambient pressure. For example, the oil pressure data may be adjusted by an ambient pressure associated with the asset. In this regard, the engine optimization system may be configured to normalize the oil pressure data by an ambient pressure associated with the asset. That is, for example, by normalizing the oil pressure data by an ambient pressure associated with the asset any changes in ambient pressure associated with the asset will not improperly impact the initiation of one or more responsive actions by the engine optimization system.

As shown in block 606, the method 600 may include generating, by applying the adjusted oil pressure data to an oil pressure residual model, oil pressure residual data indicative of one or more oil pressure residuals. As described above, in some embodiments, oil pressure residual data may be one or more items of data representative of and/or associated with one or more oil pressure residuals associated with one or more corresponding oil pressure measurements associated with oil pressure data. In this regard, an oil pressure residual may represent a perpendicular distance between an expected value of an oil pressure measurement at a particular oil temperature.

In some embodiments, the engine optimization system may be configured to generate oil pressure residual data by applying adjusted oil pressure data to an oil pressure residual model. In some embodiments, an oil pressure residual model may be a data entity that describes parameters, hyper-parameters, and/or defined operations of a rules-based, and/or machine learning model (e.g., model including at least one of one or more rule-based layers, one or more layers that depend on trained parameters, coefficients, and/or the like) configured to at least in part generate oil pressure residual data. The oil pressure residual model may utilize one or more of any type of machine learning and/or rules-based techniques including one or more of supervised learning (e.g., using user feedback), unsupervised learning, semi-supervised learning, reinforcement learning, computer vision techniques, sequence modeling techniques, language processing techniques, and/or neural network techniques. In some embodiments, the engine optimization system may be configured to generate and/or display a visualization of oil pressure residual data.

As shown in block 608, the method 600 may include generating, by performing a windowing operation on the oil pressure residual data, erratic oil pressure data for a carbon seal associated with the engine. As described above, in some embodiments, erratic oil pressure data may be one or more items of data indicative of whether a carbon seal is associated with an unacceptable amount of wear. For example, erratic oil pressure data may be one or more items of data indicative of whether a carbon seal associated with the asset (e.g., a carbon seal in an engine, such as a carbon seal in an aircraft engine) is associated with an unacceptable amount of wear. In some embodiments, a carbon seal suffering from an unacceptable amount of wear may be a carbon seal that is close to failing, has failed, and/or is negatively impacting the performance of the asset.

In some embodiments, erratic oil pressure data may indicate that a carbon seal is associated with an unacceptable amount of wear when an oil pressure residual range is greater than an oil pressure residual range threshold (e.g., a carbon seal is impacted by an unacceptable amount of wear when an oil pressure residual range is greater than an oil pressure residual range threshold). Additionally, or alternatively, erratic oil pressure data may indicate that a carbon seal is not associated with an unacceptable amount of wear when an oil pressure residual range is less than an oil pressure residual range threshold (e.g., a carbon seal is not impacted by an unacceptable amount of wear when an oil pressure residual range is less than an oil pressure residual range threshold).

In some embodiments, the engine optimization system may be configured to generate erratic oil pressure data by performing a windowing operation on the oil pressure residual data. In some embodiments, the engine optimization system may be configured to generate erratic oil pressure data by performing a windowing operation on the oil pressure residual data due to one or more properties associated with the asset (e.g., physical properties, chemical properties, and/or electrical properties associated with the asset). For example, by identifying a single minimum oil pressure residual (e.g., by performing a windowing operation), the engine optimization system may be configured to determine that the asset is operating with the carbon seal in the carbon seal's axial location, which allows more buffer air to flow past the carbon seal. In this regard, for example, performing a windowing operation to generate erratic oil pressure data for a carbon seal associated with the asset may be preferred over performing one or more other operations to generate erratic oil pressure data. For example, performing a windowing operation to generate erratic oil pressure data may be preferred over performing a standard deviation operation.

In some embodiments, performing a windowing operation may include the engine optimization system being configured to identify a maximum oil pressure residual associated with the oil pressure residual data. In this regard, for example, a maximum oil pressure residual may be the oil pressure residual in the oil pressure residual data associated with the highest oil pressure residual (e.g., an oil pressure residual of approximately 20 pounds per square inch). In some embodiments, performing a windowing operation may include the engine optimization system being configured to identify a minimum oil pressure residual associated with the oil pressure residual data. In this regard, for example, a minimum oil pressure residual may be the oil pressure residual in the oil pressure residual data associated with the lowest oil pressure residual (e.g., an oil pressure residual of approximately 5 pounds per square inch).

In some embodiments, performing a windowing operation may include the engine optimization system being configured to determine an oil pressure residual range. In some embodiments, an oil pressure residual range may be determined using a maximum oil pressure residual associated with oil pressure residual data and a minimum oil pressure residual associated with oil pressure residual data. In this regard, for example, an oil pressure residual range may represent a difference between a maximum oil pressure residual and a minimum oil pressure residual. For example, an oil pressure residual range may be approximately 15 when a minimum oil pressure residual is associated with an oil pressure residual of 5 pounds per square inch and a maximum oil pressure residual is associated with an oil pressure residual of 20 pounds per square inch.

In some embodiments, performing a windowing operation may include the engine optimization system being configured to determine if an oil pressure residual range is greater than an oil pressure range threshold. For example, if an oil pressure residual range is approximately 15 and an oil pressure range threshold is approximately 10, the oil pressure residual range may be greater than the oil pressure range threshold. In this regard, performing a windowing operation may include generating erratic oil pressure data that indicates that a carbon seal is associated with an unacceptable amount of wear (e.g., when the oil pressure residual range is greater than an oil pressure range threshold). As another example, if an oil pressure residual range is approximately 8 and an oil pressure range threshold is approximately 10, the oil pressure residual range may be less than the oil pressure range threshold. In this regard, performing a windowing operation may include generating erratic oil pressure data that indicates that a carbon seal is not associated with an unacceptable amount of wear.

As shown in block 610, the method 600 may include initiating performance of one or more responsive actions based at least in part on the erratic oil pressure data. As described above, in some embodiments, the engine optimization system may be configured to initiate performance of one or more responsive actions based at least in part on erratic oil pressure data. In this regard, the engine optimization system may be configured to initiate performance of one or more responsive actions when erratic oil pressure data indicates that a carbon seal is associated with an unacceptable amount of wear (e.g., when the erratic oil pressure data indicates that an oil pressure residual range is greater than an oil pressure residual range threshold).

In some embodiments, initiating performance of one or more responsive actions may include the engine optimization system being configured to initiate performance of a maintenance action. In this regard, for example, initiating performance of a maintenance action may include triggering procurement of a replacement carbon seal for the carbon seal associated with an unacceptable amount of wear. As another example, initiating performance of a maintenance action may include causing the asset to shut down (e.g., causing an engine to shut down to protect the engine from a carbon seal with an unacceptable amount of wear). As another example, initiating performance of a maintenance action may include causing settings of the asset to be adjusted (e.g., causing the settings of an engine to be adjusted to protect the engine from a carbon seal with an unacceptable amount of wear).

In some embodiments, initiating performance of one or more responsive actions may include the engine optimization system being configured to cause erratic oil pressure data to be displayed on an interface. In some embodiments, initiating performance of one or more responsive actions may include the engine optimization system being configured to transmit an alert to one or more computing devices indicating that a carbon seal is affected by an unacceptable amount of wear. In some embodiments, the one or more computing devices may include a remote computing device. For example, the one or more computing devices may include the asset (e.g., an onboard computing device of an aircraft associated with an engine that includes a carbon seal affected by unacceptable wear). As another example, the one or more computing devices may include a maintenance computer associated with a maintenance system used to perform maintenance on the asset.

As shown in block 612, the method 600 may optionally include filtering the oil pressure data to remove at least a portion of the oil pressure data from the oil pressure data. As described above, in some embodiments, filtering the oil pressure data may remove at least a portion of the oil pressure data from the oil pressure data. In this regard, the oil pressure data may include one or more erroneous and/or default oil pressure measurements and the engine optimization system may be configured to filter the oil pressure data to remove erroneous and/or default oil pressure measurements in the oil pressure data.

As shown in block 614, the method 600 may optionally include performing an event operation. As described above, in some embodiments, an event may be indicative of a shift in a mean value of oil pressure residual data. In this regard, in some embodiments, an event may be indicative of wear of a carbon seal associated with the asset (e.g., if the event results in the oil pressure residual range changing such that the oil pressure residual range is greater than an oil pressure residual range threshold). Additionally, or alternatively, in some embodiments, an event may indicate some other change with the asset that is not indicative of wear of a carbon seal associated with the asset (e.g., if the event results in the oil pressure residual range changing such that the oil pressure residual range is less than an oil pressure residual range threshold). For example, such an event may indicate a pressure adjustment valve (PAV) adjustment associated with the asset. As another example, such an event may indicate a failed O-ring. As another example, such an event may indicate a sensor fault. As another example, such an event may indicate an oil pump fault. In this regard, the engine optimization system may be configured to perform an event operation to identify and/or account for events that are not indicative of wear of a carbon seal associated with the asset. In some embodiments, a windowing operation may be performed after an event operation has been performed. For example, an oil pressure residual range may be determined as part of a windowing operation after an event operation has been performed.

In some embodiments, performing an event operation may include the engine optimization system being configured to parse the oil pressure residual data to identify an event. In some embodiments, the engine optimization system may be configured to parse the oil pressure residual data to identify an event using an event detection model. In some embodiments, an event detection model may be a data entity that describes parameters, hyper-parameters, and/or defined operations of a rules-based, and/or machine learning model (e.g., model including at least one of one or more rule-based layers, one or more layers that depend on trained parameters, coefficients, and/or the like) configured to at least in part identify an event associated with the oil pressure residual data. The event detection model may utilize one or more of any type of machine learning and/or rules-based techniques including one or more of supervised learning (e.g., using user feedback), unsupervised learning, semi-supervised learning, reinforcement learning, computer vision techniques, sequence modeling techniques, language processing techniques, and/or neural network techniques.

In some embodiments, performing an event operation may include the engine optimization system being configured to identify a maximum oil pressure residual from a first set of oil pressure residuals associated with the oil pressure residual data. In some embodiments, the first set of oil pressure residuals may be associated with a first time period (e.g., a time period before the event). In this regard for example, the first set of oil pressure residuals may be a number of oil pressure residuals that are identified as being the closest to the occurrence of the event that are associated with the first time period. For example, the first set of oil pressure residuals may include 10 oil pressure residuals in the oil pressure residual data that are identified as being the closest to the occurrence of the event that are associated with the first time period. In some embodiments, a maximum oil pressure residual from the first set of oil pressure residuals may be the oil pressure residual in the first set of oil pressure residuals associated with the highest oil pressure residual (e.g., an oil pressure residual of approximately 12 pounds per square inch).

In some embodiments, performing an event operation may include the engine optimization system being configured to identify a minimum oil pressure residual from a second set of oil pressure residuals associated with the oil pressure residual data. In some embodiments, the second set of oil pressure residuals may be associated with a second time period (e.g., a time period after the event). In this regard for example, the second set of oil pressure residuals may be a number of oil pressure residuals that are identified as being the closest to the occurrence of the event that are associated with the second time period. For example, the second set of oil pressure residuals may include 10 oil pressure residuals in the oil pressure residual data that are identified as being the closest to the occurrence of the event that are associated with the second time period. In some embodiments, a minimum oil pressure residual from the second set of oil pressure residuals may be the oil pressure residual in the second set of oil pressure residuals associated with the lowest oil pressure residual (e.g., an oil pressure residual of approximately 8 pounds per square inch).

In some embodiments, performing an event operation may include the engine optimization system being configured to determine an oil pressure residual range. In some embodiments, an oil pressure residual range may be determined using a maximum oil pressure residual from the first set of oil pressure residuals associated with oil pressure residual data and a minimum oil pressure residual from the second set of oil pressure residuals associated with oil pressure residual data. In this regard, for example, an oil pressure residual range may represent a difference between a maximum oil pressure residual and a minimum oil pressure residual. For example, an oil pressure residual range may be approximately 4 when a minimum oil pressure residual from the second set is associated with an oil pressure residual of 8 pounds per square inch and a maximum oil pressure residual from the first set is associated with an oil pressure residual of 12 pounds per square inch.

In some embodiments, performing an event operation may include the engine optimization system being configured to determine if an oil pressure residual range is less than an oil pressure range threshold. For example, if an oil pressure residual range is approximately 4 and an oil pressure range threshold is approximately 8, the oil pressure residual range may be less than the oil pressure range threshold.

In some embodiments, performing an event operation may include the engine optimization system being configured to, in an instance in which the oil pressure residual range is less than an oil pressure residual range threshold, adjust at least a portion of the oil pressure residual data by performing a refinement operation on oil pressure residual data. In this regard, for example, the engine optimization system may be configured to perform a refinement operation on oil pressure residual data.

In some embodiments, performing a refinement operation may include the engine optimization system being configured to determine a mean value of a first portion of the oil pressure residual data. In some embodiments, the first portion of the oil pressure residual data may be associated with a first time period. In some embodiments, the first time period occurs before the event. In this regard, for example, the engine optimization system may be configured to determine a mean value of the oil pressure residual data that includes oil pressure residuals from before the event.

In some embodiments, performing a refinement operation may include the engine optimization system being configured to determine a mean value of a second portion of the oil pressure residual data. In some embodiments, the second portion of the oil pressure residual data may be associated with a second time period. In some embodiments, the second time period occurs after the event. In this regard, for example, the engine optimization system may be configured to determine a mean value of the oil pressure residual data that includes oil pressure residuals from after the event.

In some embodiments, performing a refinement operation may include the engine optimization system being configured to adjust the second portion of the oil pressure residual data such that the mean value of the second portion of the oil pressure residual data is equal to the mean value of the first portion of the oil pressure residual data. Said differently, by performing a refinement operation, the engine optimization system may be configured to adjust the second portion of the oil pressure residual data such that an event that may indicate some other change with the asset that is not indicative of wear of a carbon seal associated with the asset does not cause the engine optimization to mistakenly identify a carbon seals as being associated with an unacceptable amount of wear. In some embodiments, the engine optimization system may be configured to generate and/or display a visualization of oil pressure residual data associated with an event.

Operations and/or functions of the present disclosure have been described herein, such as in flowcharts. As will be appreciated, computer program instructions may be loaded onto a computer or other programmable apparatus (e.g., hardware) to produce a machine, such that the resulting computer or other programmable apparatus implements the operations and/or functions described in the flowchart blocks herein. These computer program instructions may also be stored in a computer-readable memory that may direct a computer, processor, or other programmable apparatus to operate and/or function in a particular manner, such that the instructions stored in the computer-readable memory produce an article of manufacture, the execution of which implements the operations and/or functions described in the flowchart blocks. The computer program instructions may also be loaded onto a computer, processor, or other programmable apparatus to cause a series of operations to be performed on the computer, processor, or other programmable apparatus to produce a process such that the instructions executed on the computer, processor, or other programmable apparatus provide operations for implementing the functions and/or operations specified in the flowchart blocks. The flowchart blocks support combinations of means for performing the specified operations and/or functions and combinations of operations and/or functions for performing the specified operations and/or functions. It will be understood that one or more blocks of the flowcharts, and combinations of blocks in the flowcharts, can be implemented by special purpose hardware-based computer systems which perform the specified operations and/or functions, or combinations of special purpose hardware with computer instructions.

While this specification contains many specific embodiments and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

While operations and/or functions are illustrated in the drawings in a particular order, this should not be understood as requiring that such operations and/or functions be performed in the particular order shown or in sequential order, or that all illustrated operations be performed, to achieve desirable results. In certain circumstances, operations and/or functions in alternative ordering may be advantageous. In some cases, the actions recited in the claims may be performed in a different order and still achieve desirable results. Thus, while particular embodiments of the subject matter have been described, other embodiments are within the scope of the following claims.

While this specification contains many specific embodiment and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are illustrated in the drawings in a particular order, this should not be understood as requiring that such operations be performed in the particular order shown or in sequential order, or that all illustrated operations be performed, to achieve desirable results. In certain circumstances, operations in alternative ordering may be advantageous. In some cases, the actions recited in the claims may be performed in a different order and still achieve desirable results.

## Claims

1. A method comprising:
identifying oil pressure data associated with an engine;
generating adjusted oil pressure data by adjusting the oil pressure data by an engine speed or an ambient pressure;
generating, by applying the adjusted oil pressure data to an oil pressure residual model, oil pressure residual data indicative of one or more oil pressure residuals;
generating, by performing a windowing operation on the oil pressure residual data, erratic oil pressure data for a carbon seal associated with the engine; and
initiating performance of one or more responsive actions based at least in part on the erratic oil pressure data.

2. The method of claim 1, wherein the oil pressure data is indicative of a differential pressure.

3. The method of claim 2, wherein the differential pressure is indicative of a difference between a first pressure associated with an oil pump and a second pressure associated with a sump scavenge.

4. The method of claim 1, wherein a first portion of the oil pressure data is identified from a first engine control unit associated with the engine and a second portion of the oil pressure data is identified from a second engine control unit associated with the engine.

5. The method of claim 1, further comprising:
filtering the oil pressure data to remove at least a portion of the oil pressure data from the oil pressure data.

6. The method of claim 1, wherein performing the windowing operation on the oil pressure residual data comprises:
identifying a maximum oil pressure residual associated with the oil pressure residual data;
identifying a minimum oil pressure residual associated with the oil pressure residual data;
determining an oil pressure residual range using the maximum oil pressure residual associated with the oil pressure residual data and the minimum oil pressure residual associated with oil pressure residual data; and
determining if the oil pressure residual range is greater than an oil pressure residual range threshold.

7. The method of claim 1, further comprising:
performing an event operation, wherein performing the event operation comprises:
parsing the oil pressure residual data using an event detection model to identify an event;
identifying a maximum oil pressure residual from a first set of oil pressure residuals associated with the oil pressure residual data;
identifying a minimum oil pressure residual from a second set of oil pressure residuals associated with the oil pressure residual data;
determining an oil pressure residual range using the maximum oil pressure residual from the first set of oil pressure residuals associated with oil pressure residual data and the minimum oil pressure residual from the second set of oil pressure residuals associated with oil pressure residual data; and
in an instance in which the oil pressure residual range is less than an oil pressure residual range threshold, adjusting at least a portion of the oil pressure residual data by performing a refinement operation on the oil pressure residual data.

8. The method of claim 7, wherein performing the refinement operation comprises:
determining a mean value of a first portion of the oil pressure residual data, wherein the first portion of the oil pressure residual data is associated with a first time period, wherein the first time period occurs before the event;
determining a mean value of a second portion of the oil pressure residual data, wherein the second portion of the oil pressure residual data is associated with a second time period, wherein the second time period occurs after the event; and
adjusting the second portion of the oil pressure residual data such that the mean value of the second portion of the oil pressure residual data is equal to the mean value of the first portion of the oil pressure residual data.

9. The method of claim 1, wherein the engine is an aircraft engine.

10. The method of claim 1, wherein initiating performance of the one or more responsive actions based at least in part on the erratic oil pressure data comprises:
initiating performance of a maintenance action for the carbon seal.

11. An apparatus comprising at least one processor and at least one non-transitory memory including computer-coded instructions thereon, the computer coded instructions, with the at least one processor, cause the apparatus to:
identify oil pressure data associated with an engine;
generate adjusted oil pressure data by adjusting the oil pressure data by an engine speed or an ambient pressure;
generate, by applying the adjusted oil pressure data to an oil pressure residual model, oil pressure residual data indicative of one or more oil pressure residuals;
generate, by performing a windowing operation on the oil pressure residual data, erratic oil pressure data for a carbon seal associated with the engine; and
initiate performance of one or more responsive actions based at least in part on the erratic oil pressure data.

12. The apparatus of claim 11, wherein the oil pressure data is indicative of a differential pressure.

13. The apparatus of claim 12, wherein the differential pressure is indicative of a difference between a first pressure associated with an oil pump and a second pressure associated with a sump scavenge.

14. The apparatus of claim 11, wherein the computer coded instructions, further with the at least one processor, cause the apparatus to:
filter the oil pressure data to remove at least a portion of the oil pressure data from the oil pressure data.

15. A computer program product comprising at least one non-transitory computer-readable storage medium having computer program code stored thereon that, in execution with at least one processor, configures the computer program product for:
identify oil pressure data associated with an engine;
generate adjusted oil pressure data by adjusting the oil pressure data by an engine speed or an ambient pressure;
generate, by applying the adjusted oil pressure data to an oil pressure residual model, oil pressure residual data indicative of one or more oil pressure residuals;
generate, by performing a windowing operation on the oil pressure residual data, erratic oil pressure data for a carbon seal associated with the engine; and
initiate performance of one or more responsive actions based at least in part on the erratic oil pressure data.
